# EUROPÄISCHE PATENTSCHRIFT

(11) **EP 1 801 485 B1**
(45) Veröffentlichungstag und Bekanntmachung des Hinweises auf die Patenterteilung: **12.11.2008**
(21) Anmeldenummer: 06126495.8
(22) Anmeldetag: 19.12.2006
(51) Int. Cl.: F16L 37/56, F16L 39/00

(54) **Mehrfachkupplung für Medienleitungen**
Coupling device for interconnecting multiple fluid lines
Raccord multiple pour tubes ou tuyaux

(30) Priorität: 23.12.2005 DE 202005020263 U
(43) Veröffentlichungstag der Anmeldung: 27.06.2007
(73) Patentinhaber: Voss Automotive GmbH, 51688 Wipperfürth (DE)
(72) Erfinder: Brandt, Josef, 51688 Wipperfürth (DE); Brügger, Jens, 58553 Halver (DE); Goller, Bernd, 54688 Wipperfürth (DE)
(74) Vertreter: Patentanwälte Dr. Solf & Zapf

(56) Entgegenhaltungen:
- CH-A- 472 624
- FR-A- 910 664
- US-A- 2 399 525
- US-A- 3 214 195

## Beschreibung

Die vorliegende Erfindung betrifft eine Mehrfachkupplung für Medienleitungen (Rohr- oder Schlauchleitungen für hydraulische oder pneumatische Medien), mit zwei plattenartigen Kupplungsträgern, die jeweils mehrere Aufnahmen zum Einsetzen und zur fixierten Halterung von mit jeweils einer Leitung zu verbindenden Steckkupplungsteilen, und zwar von Steckerteilen und/oder Muffenteilen, derart aufweisen, dass durch Verbinden der Kupplungsträger auf ihren einander zugewandten Kupplungsseiten die Stecker- und Muffenteile paarweise in einer Fügerichtung ineinander steckbar sind, wobei in einer gesteckten Kupplungslage die Kupplungsträger über Verbindungsmittel gegen Lösen festlegbar sind.

Solche Mehrfach-Kupplungen - vgl. dazu beispielsweise die Veröffentlichungen DE 74 21 926 U, DE 89 08 944 U1und US-A-3 214 195, die die Merkmale des Oberbegriffs des Anspruchs 1 enthält- haben den Vorteil, dass mittels der Kupplungsträger mehrere Steckkupplungen gleichzeitig in einem gemeinsamen Kupplungsvorgang gekuppelt werden können. Dabei sind üblicherweise als Verbindungsmittel zum Festlegen der Kupplungsträger Schraubverbindungen vorgesehen. Dies hat den Nachteil, dass an Einbauorten, wo wenig Freiraum vorhanden ist, die Schrauben schlecht mit einem Werkzeug zu erreichen sind, so dass die Montage schwierig ist. Oftmals sind am Einbauort die Kupplungsträger auch schlecht einsehbar, so dass auch dadurch die Montage der Schraubverbindungen erschwert wird. Häufig ist damit auch eine hohe Verlustgefahr der Schraubelemente verbunden.

Der vorliegenden Erfindung liegt die Aufgabe zugrunde, eine Mehrfachkupplung der genannten Art zu schaffen, deren Kupplungsträger auch an schlecht erreichbaren und schlecht einsehbaren Einbauorten sowie insbesondere ohne Einsatz von speziellen Werkzeugen einfach und sicher verbunden und gegebenenfalls auch wieder gelöst werden können.

Erfindungsgemäß wird dies dadurch erreicht, dass die Verbindungsmittel nach Art eines Bajonettverschlusses (auch "Renkverschluss" genannt) ausgebildet sind. Dazu weisen die Verbindungsmittel einen die Kupplungsträger in einem zylindrischen Verbindungsbereich axial beidseitig der Kupplungsseiten umschließenden, zylindrischen Haltering auf, der über eine erste Bajonettverbindung an dem einen Kupplungsträger vormontiert oder vormontierbar ist und über eine zweite Bajonettverbindung in der Kupplungslage mit dem anderen Kupplungsträger verbindbar ist. Somit handelt es sich erfindungsgemäß um einen zweifachen Bajonettverschluss, wobei der Haltering axial, entsprechend der Steckfügerichtung, von der Kupplungsseite her auf den einen Kupplungsträger aufgesetzt und durch Verdrehen in einer Schließ-Drehrichtung in eine Vormontageposition überführt wird. In dieser Vormontageposition können die Kupplungsträger gekuppelt und dadurch die Steckverbindungsteile gesteckt werden. In dieser Kupplungslage erfolgt dann durch Weiterdrehen des Halterings in Schließ-Drehrichtung die Bajonett-Verbindung mit dem anderen Kupplungsträger.

Die Erfindung ermöglicht eine sehr einfache und manuell durchführbare Montage. Es sind keine speziellen Werkzeuge und vorteilhafterweise auch keine gesonderten Verbindungselemente erforderlich, so dass auch eine Verlustgefahr nicht besteht. Vielmehr ist der Haltering durch seine Vormontage eigentlich Bestandteil des einen Kupplungsträgers.

Weitere vorteilhafte Ausgestaltungsmerkmale der Erfindung sind in den Unteransprüchen enthalten und werden zusammen mit daraus resultierenden Vorteilen in der folgenden Beschreibung erläutert.

In der Zeichnung ist ein bevorzugtes Ausführungsbeispiel der Erfindung veranschaulicht. Dabei zeigen:
- Fig. 1: eine Seitenansicht einer erfindungsgemäßen Mehrfachkupplung in der verbundenen Kupplungslage der Kupplungsträger, jedoch ohne Steckkupplungsteile,
- Fig. 2: eine Draufsicht in Pfeilrichtung II gemäß Fig. 1,
- Fig. 3: einen Schnitt in der Ebene III - III gemäß Fig. 2,
- Fig. 4: einen Schnitt in der Ebene IV - IV gemäß Fig. 2,
- Fig. 5: einen Querschnitt in der Ebene V - V gemäß Fig. 1,
- Fig.6: eine gesonderte Perspektivansicht des einen Kupplungsträgers (Oberteil),
- Fig. 7: eine gesonderte Perspektivansicht des Halterings,
- Fig. 8: eine gesonderte Perspektivansicht des anderen Kupplungsträgers (Unterteil),
- Fig. 9: eine Seitenansicht des einen Kupplungsträgers gemäß Fig. 6,
- Fig. 10: einen Querschnitt durch den einen Kupplungsträger in der Ebene X - X gemäß Fig. 9,
- Fig. 11: einen vergrößerten Schnitt entsprechend Fig. 3, jedoch mit eingesetzten und gesteckten Steckkupplungsteilen,
- Fig. 12 a, b: die Kupplungsträger gemäß Fig. 11 in einem voneinander getrennten Zustand,
- Fig. 13: eine Perspektivansicht des einen Kupplungsträgers mit dem Haltering in einem Übergangszustand während der Vormontage,
- Fig. 14: eine Ansicht analog zu Fig. 13 in der Vormontageposition des Halteringes,
- Fig. 15: eine Perspektivansicht in einer Übergangsstellung beim Kuppeln der Kupplungsträger und
- Fig. 16: eine weitere Perspektivansicht der erfindungsgemäßen Mehrfachkupplung in der Kupplungslage der Kupplungsträger und in der Schließlage des Halteringes.

In den verschiedenen Figuren der Zeichnung sind gleiche Teile stets mit den gleichen Bezugszeichen versehen.

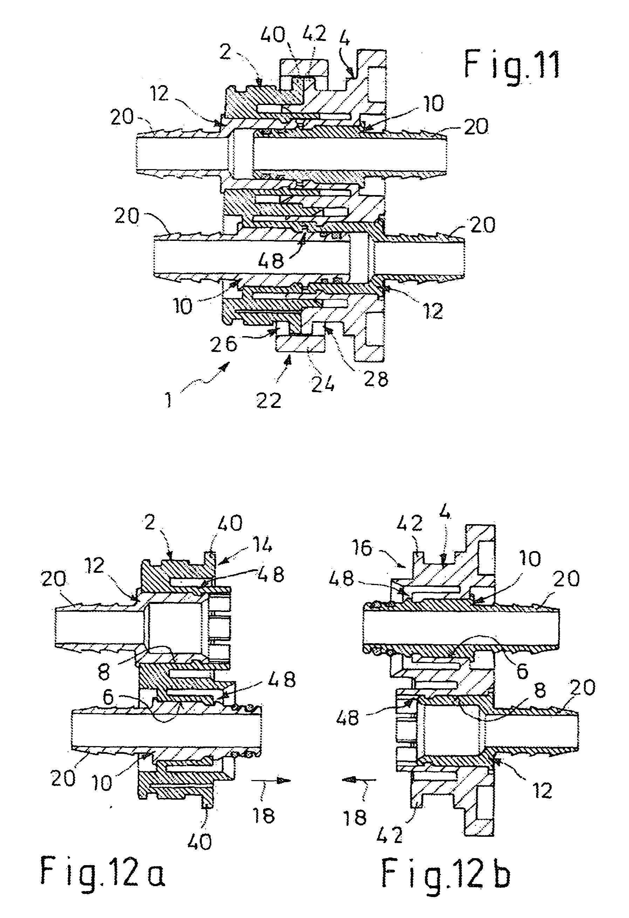

Eine erfindungsgemäße Mehrfachkupplung 1 besteht aus zwei plattenartigen Kupplungsträgern 2 und 4, wobei der eine Kupplungsträger 2 ein Oberteil bzw. eine Deckplatte bildet und der andere Kupplungsträger 4 ein Unterteil bzw. eine Grundplatte. Jeder Kupplungsträger 2, 4 weist mehrere Aufnahmen 6, 8 zum Einsetzen und zur fixierten Halterung von Steckerteilen 10 und/oder Muffenteilen 12 derart auf, dass durch Verbinden der Kupplungsträger 2, 4 auf ihren einander zugewandten Kupplungsseiten 14, 16 die Stecker- und Muffenteile 10, 12 paarweise in einer Fügerichtung (siehe die Pfeile 18 in Fig. 12a, 12b) ineinander steckbar sind. Die Steckkupplungsteile 10, 12 sind anderseitig mit nicht dargestellten Medienleitungen (Schlauch- oder Rohrleitungen für pneumatische oder hydraulische Medien) verbindbar, wozu sie jeweils einen Anschlussstutzen 20 insbesondere mit einem Dornprofil aufweisen.

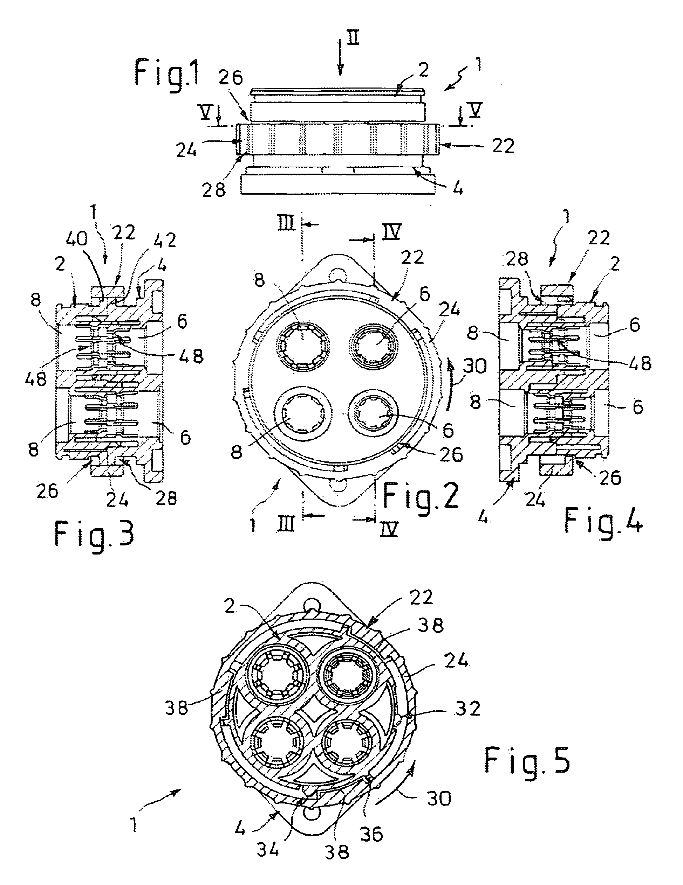

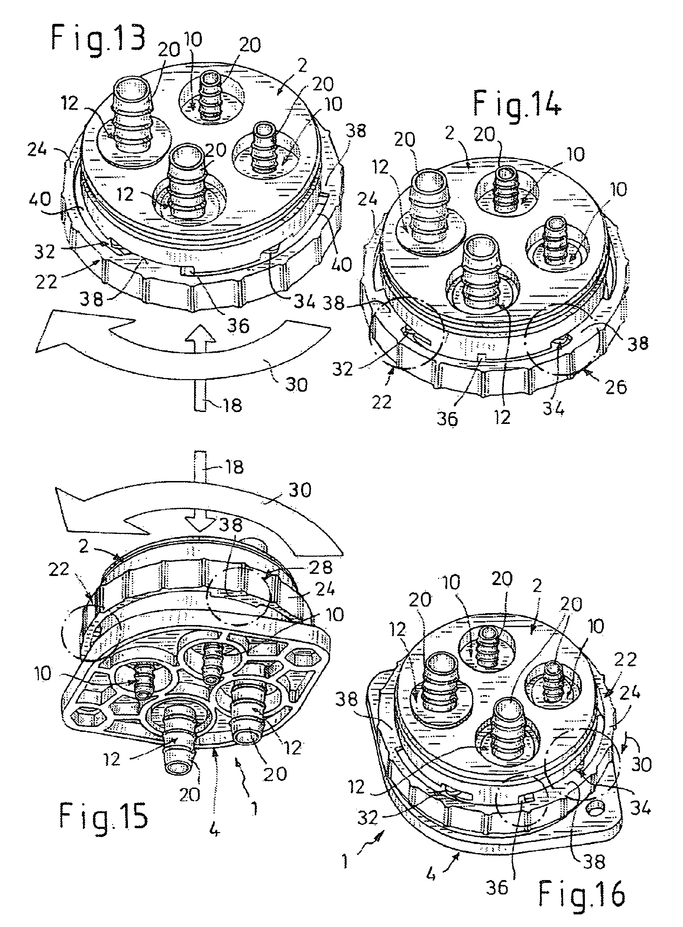

In der in den Fig. 1 bis 5, in Fig. 11 sowie in Fig. 15 und 16 veranschaulichten Kupplungslage sind die Kupplungsträger 2, 4 über Verbindungsmittel 22 relativ zueinander gegen Lösen festlegbar.

Erfindungsgemäß sind nun diese Verbindungsmittel 22 nach Art eines Bajonettverschlusses und genauer gesagt als zweifacher Bajonettverschluss ausgebildet. Dazu ist ein zylinderkranzförmiger Haltering 24 vorgesehen, der in der Kupplungslage einen zylindrischen, beidseitig der aneinanderliegenden Kupplungsseiten 14, 16 liegenden Verbindungsbereich der beiden Kupplungsträger 2, 4 umschließt und dabei über eine erste Bajonettverbindung 26 an dem einen Kupplungsträger, insbesondere wie dargestellt an dem Oberteil 2, vormontiert und über eine zweite Bajonettverbindung 28 in der Kupplungslage mit dem anderen Kupplungsträger, beispielsweise dem Unterteil 4, verbindbar ist.

Die erste Bajonettverbindung 26 ist so ausgelegt, dass der Haltering 24 gemäß Fig. 13 axial, entsprechend der Fügerichtung (Pfeil 18), von der Kupplungsseite 14 her auf den Kupplungsträger 2 aufgesetzt und durch Verdrehen in einer Schließ-Drehrichtung (Pfeil 30) in eine Vormontageposition überführbar ist, die in Fig. 14 veranschaulicht ist. Vorzugsweise ist der Haltering 24 in der Vormontageposition einerseits über (erste) Rastmittel 32 gegen ein Zurückdrehen in einer dem Pfeil 30 entgegengesetzten Löse-Drehrichtung gesichert, andererseits aber derart weiter in Schließ-Drehrichtung (Pfeil 30) drehbar, dass in der Kupplungslage - siehe Fig. 15 und 16 - durch Weiterdrehen in Schließ-Drehrichtung (Pfeil 30) und insbesondere unter Überwindung von zweiten Rastmitteln 34 das Schließen der zweiten Bajonettverbindung 28 zu dem anderen Kupplungsträger 4 hin erfolgt. Diese Schließlage ist in Fig. 16 dargestellt. Demnach ist der Haltering 24 in der Schließlage außerdem über mindestens einen Anschlag 36 gegen Weiterdrehen in der Schließ-Drehrichtung 30 blockiert. Zudem ist der Haltering 24 in der Schließlage über die zweiten Rastmittel 34 gegen Zurückdrehen in Löse-Drehrichtung (entgegen Pfeilrichtung 30) gesichert. Dabei kann durch eine bestimmte Ausgestaltung der Rastmittel 34 erreicht werden, dass der Haltering 24 entweder kraftformschlüssig und damit lösbar oder aber formschlüssig und dadurch unlösbar gegen Zurückdrehen gesichert ist. Vorteilhafterweise fixieren die zweiten Rastmittel 34 gemäß Fig. 14 den Haltering 24 auch in der Vormontageposition gegen Weiterdrehen in Pfeilrichtung 30 in die Schließlage, wobei es sich hier aber um eine kraftformschlüssige Fixierung derart handelt, dass der Haltering 24 jedenfalls unter Überwindung der Rastmittel 34 in die Schließlage verdreht werden kann.

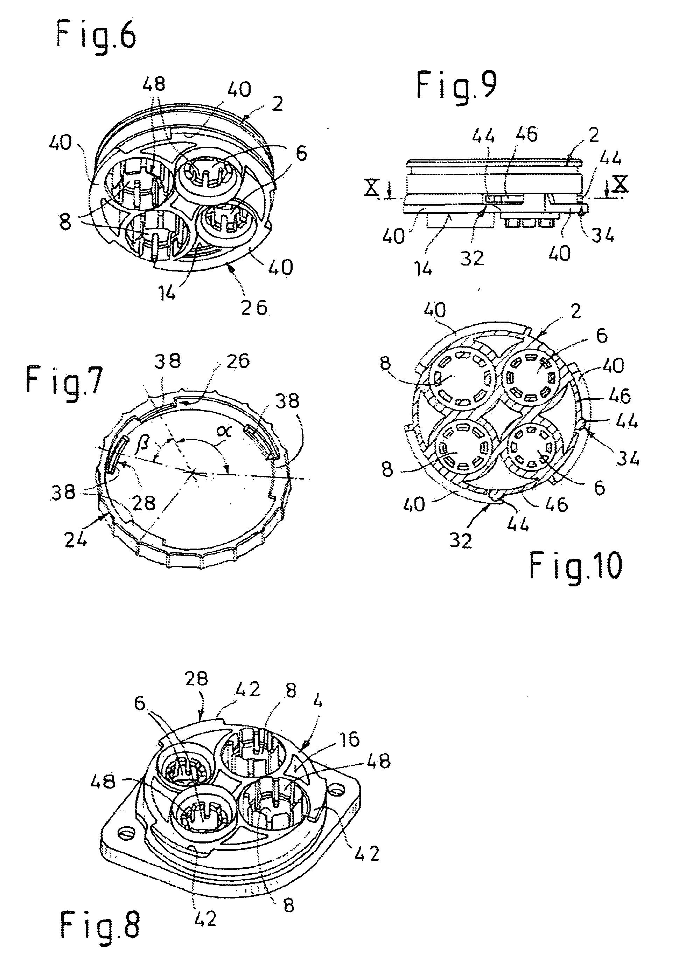

Für die beiden Bajonett- oder Renkverbindungen 26, 28 weist der Haltering 24 im Bereich seiner beiden gegenüberliegenden Stirnseiten radial nach innen ragende, über den Umfang verteilt angeordnete und jeweils der ersten bzw. der zweiten Bajonettverbindung 26, 28 zugeordnete Bajonettansätze 38 auf. Diese stegartigen und sich in Umfangsrichtung erstreckenden Bajonettansätze 38 sind dabei vorzugsweise in Anpassung an korrespondierende Bajonettelemente 40 bzw. 42 der beiden Kupplungsträger 2, 4 derart ausgelegt, dass der Haltering 24 beliebig in jeder von zwei möglichen räumlichen Ausrichtungen vormontierbar ist. Dies läßt sich anhand der Fig. 7 in Verbindung mit Fig. 6 und 8 nachvollziehen. Daraus ist auch zu erkennen, dass der Haltering 24 für jede Bajonettverbindung 26, 28 bevorzugt drei Bajonettansätze 38 aufweist, die bezogen auf die Mittelpunkte ihrer Umfangserstreckung um jeweils einen Winkel α von 120° gegeneinander in Umfangsrichtung versetzt angeordnet sind. Zudem sind die axial gegenüberliegenden und den beiden Bajonettverbindungen 26 bzw. 28 zugeordneten Bajonettansätze 38 gegeneinander um einen Versatzwinkel β von vorzugsweise etwa 50° in Umfangsrichtung versetzt.

Wie sich insbesondere aus Fig. 9 und 10 ergibt, sind die Rastmittel 32, 34 jeweils durch ein in radialer Richtung federelastisches und mit einem der Bajonettansätze 38 des Halterings 24 zusammenwirkendes Rastelement 44 des Kupplungsträgers 2 gebildet. Dabei kann das jeweilige Rastelement 44 einstückig über einen elastischen Federarm 46 mit dem Kupplungsträger 2 verbunden sein.

Für eine gute manuelle Handhabbarkeit ist es vorteilhaft, wenn der Haltering 24 auf seinem äußeren Umfang eine griffgünstige, insbesondere gerippte oder geriffelte Kontur aufweist. Hierzu wird insbesondere auf Fig. 7 verwiesen.

Es ist weiterhin vorteilhaft, wenn jeder Kupplungsträger 2, 4 sowohl (z. B. zwei) Aufnahmen 6 für Steckerteile 10 als auch (z. B. zwei) Aufnahmen 8 für Muffenteile 12 aufweist. Dabei können dann die Aufnahmen 6, 8 derart kodiert angeordnet sein, dass die mit den Steckkupplungsteilen 10, 12 bestückten Kupplungsträger 2, 4 nur in einer bestimmten Relativausrichtung kuppelbar sind.

Wie sich aus Fig. 11 und 12 ergibt, werden die Steckkupplungsteile 10, 12 in den zugehörigen Aufnahmen 6, 8 über Rastmittel 48 der Kupplungsträger 2, 4 gehalten. Dabei ist vorzugsweise vorgesehen, dass die Rastmittel 48 in der Kupplungslage - siehe Fig. 11 - selbsttätig gegenseitig formschlüssig verriegelt werden. Einzelheiten zu dieser Ausgestaltung sind auch in der EP 0 618 393 B1 enthalten, auf die deshalb an dieser Stelle in vollem Umfange Bezug genommen wird.

Abschließend soll noch kurz die Montage der erfindungsgemäßen Mehrfachkupplung erläutert werden.

Zunächst erfolgt die Vormontage des Halterings 24 durch Verbinden mit dem einen Kupplungsträger 2. Dazu wird der Haltering 24 von der Kupplungsseite 14 her aufgesetzt, indem seine Bajonettansätze 38 axial durch Lücken zwischen den Bajonettelementen 40 des Kupplungsträgers 2 geführt werden, bis der Haltering 24 mit den Bajonettansätzen 38 an einer umlaufenden Stufe des Kupplungsträgers 2 zur Anlage kommt. Der Haltering 24 wird nun in Pfeilrichtung 30 in die Vormontagepostion gedreht, so dass die Bajonettansätze 38 in axialer Richtung in Überdeckung mit den Bajonettelementen 40 des Kupplungsträgers 2 gelangen. Über die ersten Rastmittel 32 erfolgt die Fixierung gegen Zurückdrehen. In dieser Stellung befindet sind ein anderer Bajonettansatz 38 des Halterings 24 unmittelbar vor den zweiten Rastmitteln 34. Dadurch ist der Haltering 24 gegen ungewolltes Verdrehen in beiden Richtungen gesichert und somit fertig vormontiert.

Zur eigentlichen Montage, d. h. zum Kuppeln, wird der den vormontierten Haltering 24 tragende Kupplungsträger 2 am Haltering 24 ergriffen und auf den beispielsweise ortsfest in einem Fahrzeug befestigten anderen Kupplungsträger 4 aufgesteckt. Durch die Kodierung der Steckkupplungsteile 10, 12 kann dies nur in einer konkreten Position erfolgen. Bei dieser Aufsteckbewegung werden die der zweiten Bajonettverbindung 28 zugeordneten Bajonettansätze 38 des Halterings 24 durch Freiräume zwischen den Bajonettelementen 42 des Kupplungsträgers 4 geführt. Diese Aufsteckbewegung wird durch Aneinanderstoßen der Kupplungsseiten 14, 16 der Kupplungsträger 2, 4 begrenzt. Nachfolgend wird der Haltering 24 weiter in Pfeilrichtung 30 gedreht, und zwar unter Überwindung der zweiten Rastmittel 34. Schließlich kommen die der ersten Bajonettverbindung 26 zugeordneten Bajonettansätze 38 des Halterings an Anschlägen 36 des Kupplungsträgers 2 zur Anlage. In dieser Schließposition überdecken sich dann insgesamt zwölf Bajonettansätze bzw. Bajonettelemente, so dass die Mehrfachkupplung sicher verbunden ist. Dazu sei noch bemerkt, dass die Bajonettelemente 40 des einen Kupplungsteils 2, an dem der Haltering 24 vormontiert wird, eine insbesondere etwa doppelt so große Umfangserstreckung aufweisen als die Bajonettelemente 42 des anderen Kupplungsträgers 4. Dadurch bleiben die Bajonettansätze 38 des Halterings 24 sowohl in der Vormontageposition als auch in der Schließposition in axialer Überdeckung mit den Bajonettelementen 40.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Mehrfachkupplung (1) für Medienleitungen, mit Verbindungsmitteln (22) und mit zwei plattenartigen Kupplungsträgern (2, 4), die jeweils mehrere Aufnahmen (6, 8) zum Einsetzen und zur fixierten Halterung von Steckkupplungsteilen (10, 12), und zwar von Steckerteilen (10) und/oder Muffenteilen (12), derart aufweisen, dass durch Verbinden der Kupplungsträger (2, 4) auf ihren einander zugewandten Kupplungsseiten (14, 16) die Stecker- und Muffenteile (10, 12) paarweise in einer Fügerichtung (18) ineinander steckbar sind, wobei in einer gesteckten Kupplungslage die Kupplungsträger (2, 4) über die Verbindungsmittel (22) gegen Lösen festlegbar sind, wobei die Verbindungsmittel (22) einen die Kupplungsträger (2, 4) in einem Verbindungsbereich beidseitig der Kupplungsseiten (14, 16) umschließenden Haltering (24) aufweisen,
**dadurch gekennzeichnet, dass** die Verbindungsmittel (22) als zweifacher Bajonettverschluss ausgebildet sind, wobei der Haltering (24) über eine erste Bajonettverbindung (26) an dem einen Kupplungsträger (2) vormontiert oder vormontierbar ist und über eine zweite Bajonettverbindung (28) in der Kupplungslage mit dem anderen Kupplungsträger (4) verbindbar ist.

2. Mehrfachkupplung nach Anspruch 1,
**dadurch gekennzeichnet, dass** der Haltering (24) axial, entsprechend der Fügerichtung (18) von der Kupplungsseite (14) her auf den einen Kupplungsträger (2) aufgesetzt oder aufsetzbar und durch Verdrehen in einer Schließ-Drehrichtung (30) in eine Vormontageposition überführt oder überführbar ist.

3. Mehrfachkupplung nach Anspruch 2,
**dadurch gekennzeichnet, dass** der Haltering (24) in der Vormontageposition einerseits über Rastmittel (32) gegen Zurückdrehen in einer Löse-Drehrichtung gesichert ist, andererseits aber derart weiter in Schließ-Drehrichtung (30) drehbar ist, dass in der - in der Vormontageposition gesteckten - Kupplungslage durch Weiterdrehen in Schließ-Drehrichtung (30) - insbesondere unter Überwindung von zweiten Rastmitteln (34) - in einer Schließlage die Verbindung mit dem anderen Kupplungsträger (4) erfolgt.

4. Mehrfachkupplung nach Anspruch 3,
**dadurch gekennzeichnet, dass** derHaltering(24)inder Schließlage über mindestens einen Anschlag (36) gegen Weiterdrehen in Schließ-Drehrichtung (30) blockiert ist.

5. Mehrfachkupplung nach Anspruch 3 oder 4,
**dadurch gekennzeichnet, dass** derHaltering(24)inder Schließlage über Rastmittel (34) kraftformschlüssig oder formschlüssig gegen Zurückdrehen in Löse-Drehrichtung gesichert ist.

6. Mehrfachkupplung nach einem der Ansprüche 1 bis 5,
**dadurch gekennzeichnet, dass** der Haltering (24) im Bereich seiner beiden Stirnseiten radial nach innen ragende, über den Umfang verteilt angeordnete und jeweils der ersten bzw. der zweiten Bajonettverbindung (26, 28) zugeordnete Bajonettansätze (38) aufweist, die vorzugsweise in Anpassung an korrespondierende Bajonettelemente (40, 42) der Kupplungsträger (2, 4) derart ausgelegt sind, dass der Haltering (24) beliebig in jeder von zwei möglichen Ausrichtungen vormontierbar ist.

7. Mehrfachkupplung nach Anspruch 6,
**dadurch gekennzeichnet, dass** der Haltering (24) für jede Bajonettverbindung (26, 28) drei um jeweils einen Winkel (α) von 120° gegeneinander in Umfangsrichtung versetzte Bajonettansätze (38) aufweist, wobei die Bajonettansätze (38) der beiden Bajonettverbindungen (26, 28) gegeneinander um einen Versatzwinkel (β) von vorzugsweise etwa 50° in Umfangsrichtung versetzt sind.

8. Mehrfachkupplung nach Anspruch 6 oder 7 und einem der Ansprüche 3 bis 5
**dadurch gekennzeichnet, dass** dieRastmittel(32,34)jeweils durch ein in radialer und/oder axialer Richtung federelastisches und mit einem der Bajonettansätze (38) des Halterings (24) zusammenwirkendes Rastelement (44) des einen Kupplungsträgers (2) gebildet sind.

9. Mehrfachkupplung nach einem der Ansprüche 1 bis 8,
**dadurch gekennzeichnet, dass** der Haltering (24) auf seinem äußeren Umfang eine griffgünstige, insbesondere gerippte oder geriffelte Kontur aufweist.

10. Mehrfachkupplung nach einem der Ansprüche 1 bis 9,
**dadurch gekennzeichnet, dass** jeder Kupplungsträger (2, 4) sowohl Aufnahmen (6) für Steckerteile (10) als auch Aufnahmen (8) für Muffenteile (12) aufweist, wobei vorzugsweise die Aufnahmen (6, 8) derart kodiert angeordnet sind, dass die mit den Steckkupplungsteilen (10, 12) bestückten Kupplungsträger (2, 4) nur in einer bestimmten Relativausrichtung kuppelbar sind.

11. Mehrfachkupplung nach einem der Ansprüche 1 bis 10,
**dadurch gekennzeichnet, dass** dieSteckkupplungsteile(10, 12) in den Aufnahmen (6, 8) über Rastmittel (48) gehalten werden, wobei vorzugsweise die Rastmittel (48) in der Kupplungslage selbsttätig formschlüssig verriegelt werden.

## Claims

1. A multiple coupling (1) for medium lines, with connecting means (22) and with two plate-like coupling holders (2, 4), which each have a plurality of receptacles (6, 8) for insertion and for fixed holding of plug-in coupling parts (10, 12), namely of plug parts (10) and/or sleeve parts (12), such that by connecting the coupling holders (2, 4) on their coupling sides (14, 16) which face one another the plug and sleeve parts (10, 12) can be inserted into one another in pairs in a joining direction (18), with the coupling holders (2, 4) being able to be secured against detachment via the connecting means (22) in a connected coupling position, the connecting means (22) having a holding ring (24) surrounding the coupling holder (2, 4) in a connection region on both sides of the coupling sides (14, 16),
**characterised in that** the connecting means (22) are in the form of a dual bayonet lock, the holding ring (24) being preassembled or being able to be preassembled via a first bayonet connection (26) on the one coupling holder (2) and being able to be connected to the other coupling holder (4) via a second bayonet connection (28) in the coupling position.

2. A multiple coupling according to Claim 1, **characterised in that** the holding ring (24) is placed on or can be placed on the one coupling holder (2) axially, corresponding to the joining direction (18) from the coupling side (14), and is converted or can be converted into a preassembly position by turning in a closing direction of rotation (30).

3. A multiple coupling according to Claim 2, **characterised in that** the holding ring (24) in the preassembly position is secured on one hand by catch means (32) against turning back in a detaching direction of rotation, but on the other hand can be turned further in the closing direction of rotation (30) such that in the coupling position - inserted in the preassembly position - by turning further in the closing direction of rotation (30) - in particular overcoming second catch means (34) - the connection with the other coupling holder (4) takes place in a closing position.

4. A multiple coupling according to Claim 3, **characterised in that** the holding ring (24) in the closing position is blocked against turning further in the closing direction of rotation (30) via at least one stop (36).

5. A multiple coupling according to Claim 3 or 4, **characterised in that** the holding ring (24) in the closing position is secured in a frictionally/positively locking manner or in a positively locking manner against turning back in the detaching direction of rotation (30) via catch means (34).

6. A multiple coupling according to one of Claims 1 to 5, **characterised in that** the holding ring (24) in the region of its two end faces has radially inwardly projecting bayonet projections (38) arranged distributed across the periphery and associated in each case with the first or the second bayonet connection (26, 28) respectively, which projections are preferably designed adapted to corresponding bayonet elements (40, 42) of the coupling holders (2, 4) such that the holding ring (24) can be preassembled as desired in either of two possible orientations.

7. A multiple coupling according to Claim 6, **characterised in that** the holding ring (24) for each bayonet connection (26, 28) has three bayonet projections (38) each offset by an angle (α) of 120° relative to one another in the peripheral direction, the bayonet projections (38) of the two bayonet connections (26, 28) being offset relative to one another by an angle of offset (β) of preferably about 50° in the peripheral direction.

8. A multiple coupling according to Claim 6 or 7 and one of Claims 3 to 5, **characterised in that** the catch means (32, 34) are formed in each case by a catch element (44) of one coupling holder (2) which is resilient in the radial and/or axial direction and cooperates with one of the bayonet projections (38) of the holding ring (24).

9. A multiple coupling according to one of Claims 1 to 8, **characterised in that** the holding ring (24) on its outer periphery has a contour which is favourable to gripping, in particular ribbed or corrugated.

10. A multiple coupling according to one of Claims 1 to 9, **characterised in that** each coupling holder (2, 4) has both receptacles (6) for plug parts (10) and receptacles (8) for sleeve parts (12), with the receptacles (6, 8) preferably being arranged coded such that the coupling holders (2, 4) equipped with the plug-in coupling parts (10, 12) can only be coupled in a certain relative orientation.

11. A multiple coupling according to one of Claims 1 to 10, **characterised in that** the plug-in coupling parts (10, 12) are held in the receptacles (6, 8) via catch means (48), with the catch means (48) preferably being locked in a positively-locking manner automatically in the coupling position.

## Revendications

1. Raccord multiple (1) pour conduites de produit avec des moyens de liaison (22) et avec deux supports de raccord (2, 4) de type plaque qui présentent respectivement plusieurs logements (6, 8) pour l'insertion et le maintien fixé de parties de raccord enfichées (10, 12), c'est-à-dire de parties de connecteur (10) et/ou de parties de manchon (12) de telle sorte que par la liaison des supports de raccord (2, 4) sur leurs côtés de raccord (14, 16) tournés l'un vers l'autre, les parties de connecteur et de manchon (10, 12) peuvent être emboîtées l'une dans l'autre par paires dans un sens d'assemblage (18), les supports de raccord (2, 4) pouvant être fixés dans une position de raccord enfichée par le biais de moyens de liaison (22) contre tout desserrement, les moyens de liaison (22) présentant une bague de support (24) entourant les supports de raccord (2, 4) dans une zone de liaison de par et d'autre des côtés de raccord (14, 16), **caractérisé en ce que** les moyens de liaison (22) sont réalisés comme une double fermeture à baïonnette, la bague de support (24) étant ou pouvant être prémontée par une première liaison à baïonnette (26) sur un support de raccord (2) et pouvant être reliée par une seconde liaison à baïonnette (28) dans la position de raccord à l'autre support de raccord (4).

2. Raccord multiple selon la revendication 1, **caractérisé en ce que** la bague de support (24) est ou peut être placée axialement, selon le sens d'assemblage (18) depuis le côté de raccord (14) sur le support de raccord (2) et est ou peut être passée par rotation dans un sens de rotation de fermeture (30) dans une position de prémontage.

3. Raccord multiple selon la revendication 2, **caractérisé en ce que** la bague de support (24) est bloquée dans la position de prémontage d'une part par des moyens d'encliquetage (32) contre toute rotation en arrière dans un sens de rotation de desserrement, mais peut être tournée d'autre part encore dans le sens de rotation de fermeture (30) de telle sorte que dans la position de raccord, enfichée dans la position de prémontage, la liaison avec l'autre support de raccord (4) est effectuée par une autre rotation dans le sens de rotation de fermeture (30) en particulier en surmontant les deuxièmes moyens d'encliquetage (34), dans une position de fermeture.

4. Raccord multiple selon la revendication 3, **caractérisé en ce que** la bague de support (24) est bloquée dans la position de fermeture par au moins une butée (36) contre une autre rotation dans le sens de rotation de fermeture (30).

5. Raccord multiple selon la revendication 3 ou 4, **caractérisé en ce que** la bague de support (24) est bloquée dans la position de fermeture par des moyens d'encliquetage (34) à force ou par complémentarité de forme contre toute rotation en arrière dans le sens de rotation de desserrement.

6. Raccord multiple selon l'une quelconque des revendications 1 à 5, **caractérisé en ce que** la bague de support (24) présente dans la zone de ses deux côtés frontaux des épaulements de baïonnette (38), dépassant radialement vers l'intérieur, disposés répartis sur la périphérie et associés respectivement à la première ou à la seconde liaison à baïonnette (26, 28), qui sont conçus de préférence de manière à s'adapter aux éléments de baïonnette (40, 42) correspondants des supports de raccord (2, 4) de telle sorte que la bague de support (24) puisse être prémontée de manière quelconque dans chacune des deux orientations possibles.

7. Raccord multiple selon la revendication 6, **caractérisé en ce que** la bague de support (24) pour chaque liaison à baïonnette (26, 28) présente trois épaulements de baïonnette (38) décalés de respectivement un angle (α) de 120 ° l'un contre l'autre dans le sens périphérique, les épaulements de baïonnette (38) des deux liaisons à baïonnette (26, 28) étant décalés l'un contre l'autre d'un angle de déport (β) de préférence d'environ 50° dans le sens périphérique.

8. Raccord multiple selon la revendication 6 ou 7 et l'une quelconque des revendications 3 à 5, **caractérisé en ce que** les moyens d'encliquetage (32, 34) sont formés respectivement par un élément d'encliquetage (44) d'un support de raccord (2) coopérant avec l'un des épaulements de baïonnette (38) de la bague de support (24) et à élasticité de ressort dans le sens radial et/ou axial.

9. Raccord multiple selon l'une quelconque des revendications 1 à 8, **caractérisé en ce que** la bague de support (24) présente sur sa périphérie extérieure un contour propice à la préhension, en particulier nervuré ou cannelé.

10. Raccord multiple selon l'une quelconque des revendications 1 à 9, **caractérisé en ce que** chaque support de raccord (2, 4) présente des logements (6) pour des parties de connecteur (10) ainsi que des logements (8) pour des parties de manchon (12), les logements (6, 8) étant disposés de préférence de manière codée de telle sorte que les supports de raccord (2, 4) équipés des parties de raccord enfichées (10, 12) ne puissent être couplés que dans une orientation relative déterminée.

11. Raccord multiple selon l'une quelconque des revendications 1 à 10, **caractérisé en ce que** les parties de raccord enfichées (10, 12) sont maintenues dans les logements (6, 8) par des moyens d'encliquetage (48), les moyens d'encliquetage (48) étant verrouillés automatiquement par complémentarité de formes de préférence dans la position de raccord.
